Europäisches Patentamt

European Patent Office

Office européen des brevets

(19)

(11) Publication number: **0 226 203**
**A2**

## (12) EUROPEAN PATENT APPLICATION

(21) Application number: **86117438.1**

(51) Int. Cl.⁴: **B01D 53/36**

(22) Date of filing: **15.12.86**

(30) Priority: **20.12.85 PL 256965**

(43) Date of publication of application:
**24.06.87 Bulletin 87/26**

(84) Designated Contracting States:
**AT BE CH DE ES FR GB GR IT LI NL SE**

(71) Applicant: **Polska Akademia Nauk Instytut Katalizy I Fizykochemii Powierzchni ul. Niezapominajek Krakow(PL)**

(72) Inventor: **Wojciechowski, Jerzy, Dr. Chem.-Ing. ul. Wielopole 18a/2 Krakow(PL)**

(74) Representative: **Schrimpf, Robert et al Cabinet Regimbeau 26, Avenue Kléber F-75116 Paris(FR)**

(54) **Method and device for catalytic purification of gases with low concentration of pollution.**

(57) The present invention relates to a method and device for catalytic purification of gases, particularly industrial gases, which carry indesirable pollution. The method comprises driving the polluted gases through a catalyst bed with heating elements (6) covered with a ceramic layer and a catalytically active substance.

The device for the method is of cylindrical shape (1) divided into three chambers with perforated metal (2), (3), (4) et (5) The central catalyst chamber houses heating members (6) covered with ceramic materials and catalytically active substance.

External chambers are filled with ceramic fill for heat storage.

EP 0 226 203 A2

## Method and device for catalytic purification of gases with low concentration of pollution.

The present invention relates to a method for catalytic purification of gases, particularly industrial gases, preferably those in which the concentration of undesired pollution is relatively low, and a device for applying this method.

The processes of catalytic gas purification take place in temperatures of 200 -400°C. Therefore, all known methods for catalytic gas purification require heating the gases to be purified to such temperature. In order to reduce the power consumption, the installations for catalytic gas purification are equipped with heat recuperators, which regain a part of the heat. Nevertheless, the average heat consumption in these processes totals about 50 kcal per 1 cu.m. of purified gas.

According to new process solutions, e.g. according to the Polish patent specification No 126861, gases may be purified with the use of a reverse method. In this process the direction of gas flowing through the reactor is reversed in cycles, the catalyst bed is placed between two layers of ceramic filling and the heat necessary for heating the catalyst is supplied to the central part of the catalyst bed. The heat consumption of this method, is reduced to 5-10 Kcal/cu.m at the average, and is a significant pro gress as compared with the previous methods.

In certain cases even so low a consumption of power is too high and expensive, for instance in purification of large volumes of gases with a low concentration of pollutants. An example here may be stripping the chambers for agricultural product storage of ethylene, stripping gases of solvent residnes in varnishing chambers and deodorization of air in industrial plant halls.

Introduction of heating elements directly into the catalyst bed is known, for instance, from the Polish patent specification No 123101. However, practice has shown that on contact of the platynic or oxide catalyst with the hot surface of the heating elements local cells are formed, which cause burnouts of heaters. This phenomenon has practically excluded construction of catalytic chambers with heaters located directly in the catalyst bed.

It has been unexpectedly stated that the phenomenon of local cells may be excluded by means of the method and device of the present invention.

The method of the present invention allows for purification of gases at a still lower power consumption, than in methods described above. The method is a further rationalization of the reverse method.

According to the present invention the method for catalytic purification of low polluted gases by means of catalytic destruction of pollution on a catalyst bed situated between two layers of ceramic fill, and reversion in cycles of the flow direction of gas is such, that the gas, polluted with catalytically convertible compounds is driven through the catalyst bed and heated to the reaction initiating temperature with the use of electric heating elements submerged in the granular catalyst bed, used in gas after-burning processes. The external surface of the heating elements is previously covered with a ceramic layer, particularly of silicon oxides, preferably by mean of proofing the surface with aqueous solution of potassium or sodium silicate. The surface is then dried, roasted at a temperature of 400 -500°C, quenched and/or the created ceramic layer is proofed with an aqueous solution of chloroplatynic acid, preferably at 0.1% concentration.

When such ceramic layer is additionally proofed with a catalytically active substance, the process of initiation of the reaction of complete oxidation of organic compounds takes place sooner and needs less power. It is also of substantial importance that the temperature of the surface of the heating member cannot be too high, as it could destroy the ceramic layer or the catalytic substance spread on the surface of the heater. It has been stated that no such hazard exists if the heat emitted from the external surface of the electric heater does not exceed 1,5W/h. sq.cm.

The device of the present invention is characterized in that it is of cylindrical shape, divided with perforated partitions into two chambers with ceramic fill and one chamber with catalyst, located between the ceramic fill chambers, and the catalyst chamber houses an electric heating member, the external surface of which is covered with a ceramic layer.

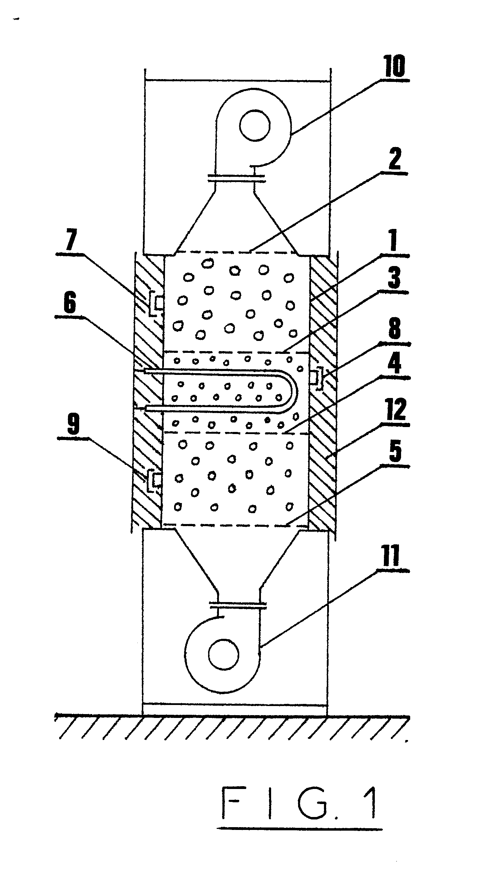

A device according to the invention is presented on the drawing figure 1.

It comprises a metal cylinder /1/ divided with perforated metal /2, 3, 4 and 5/. These partitions constitute shutters of particular chamthe drawing. It comprises a metal cylinder /1/ divided with perforated metal /2,3,4 and 5/. These partitions constitute shutters of particular chambers. Partitions /2 and 3/ and /4 and 5/ shut off chambers with ceramic fill. Partitions /3 and 4/ shut off the catalytic chamber. The catalytic chamber comprises a typical electric heating member /6/, consisting of an electric spiral and metal sheath forming a protective jacket. The outer side of the external surface of this heating member is covered with a layer of a ceramic material. This layer consists of potassium or sodium silicate formed on the external surface with aqueous solution of potassium or sodium silicate. The crea ted layer was then proofed with aqueous solution of chloro platynic acid, dried and roasted. Apart from the heating member with an active coating, the catalytic chamber also comprises for example a typical platynic catalyst used in gas after-burning processes. Connectors /7,8 and 9/ serve for pouring in and out the ceramic fill and catalyst. Fans /10/ and /11/ pumped air into the device alternatively in cycles in reverse direction. The device was surrounded with a layer of heat insulation.

The examples hereafter illustrate several realizations of the methods of the invention.

Example I. Method and device of the invention has been tested in practice. Diameter of cylinder /1/ was 200 mm. Height of the chamber with the ceramic fill was 200 mm and that of the catalyst chamber -80 mm. The catalyst used was typical spherical platynic catalyst with 6 -7 mm diameter of spheres. Fans pumped 30 cum/h of ethylene-polluted air, every 2.5 minutes alternately in reverse directions. Concentration of air pollution was 0.0001 %. An electric heating member, wound into a circle with 160 mm dia was placed within the catalytic chamber. The length of the member was 520 mm, external diameter -8 mm. The external jacket of the heating member was made of heat-resisting steel. Power consumption of the heater was controlled through changing the applied electric tension. Thermocouples measured the temperature of gas on extreme layers of the catalyst bed.

It has been stated during the experiment that when the power consumption of the heater was 230 W, the temperature of the catalyst bed in extreme points settled within the range of 230 -240°C, and the rate of ethylene conversion on the catalyst bed was 98.5. At lower temperatures the conversion was as follows:
-at temp. of 220 -230°C -97 %
-at temp. of 210 -220°C -94 %
-at temp. of 200 -210°C -87 %
-at temp. of 180 -200°C -65 %

It has been observed that when the converter is exploited for 365 hours at a temperature of 230-240°C, the electric spiral is burnt.

Example II. Example I has been repeated with one exception: the heating member jacket was covered with a ceramic layer on its external side. The layer was obtained by submerging the heating member into a 1.0 % solution of sodium silicate and then drying at 50 -100°C and roasting at 400 - 500°C. The run of the experiment was similar to that of example I, but the heating element was not burnt even after 1000 hours of work.

Example III. Example II was repeated with the exception that the heating member covered with ceramic layer was additionally proofed with 0.1 % aqueous solution of chloroplatynic acid, dried and roasted at 450 -550°C. The process of the experiment was as follows: at power consumption of 230 W the tem perature of catalyst bed settled within the range of 230 -240°C. In conditions similar to those of example I, the rate of ethylene conversion at the temperature of the 230 -240°C and 99.0 %. At lower temperatures the rate of ethylene conversion was as follows:
-at temp. of 220 -230°C -99.0 %
-at temp. of 210 -220°C -98.5 %
-at temp. of 200 -210°C -98.0 %
-at temp. of 180 - 200°C -96.5 %

When the temperature of the catalyst bed attains the value of 180 to 200°C the power consumption was 125 W. The experiment was continued at a power consumption of 165 W -the temperature of the catalyst bed oscillated then between 180 and 200°C. During 1000 hours of exploitation, the rate of ethylene conversion oscillated between 95 to 97.5 %. No burnout of the heater was stated. The above described experiments have shown that covering the external jacket of the electric heater with a thin ceramic layer prevents forming local cells which destroy the heater, if the heater is placed in platynic catalyst bed. A similar effect was obtained when a copper-zinc catalyst was used. Additional application of a catalytically active layer substantially reduces the power consumption required for catalytic conversion of ethylene maintaining, at the same time, the resistance of the heater to forming destructive cells. Similar effects were obtained, when the sili ca layer was replaced with an aluminium oxide layer.

Example VI. Effects similar to those described hereto were obtained when the air to be purified was polluted with acetone, in place of ethylene. When air was polluted with xylene, concentration of which was 0.3 g/cu.m, the effects obtained in conditions of example I /heater not proofed/ were as follows:
- xylene conversion at a temp. of 220 -230°C -0 %
-xylene conversion at a temp. of 230 -250°C -15 %
-xylene conversion at a temp. of 250 -280°C -75 %
-xylene conversion at a temp. of 280 -300°C -88 %
-xylene conversion at a temp. of 300 -330°C -95 %.

The heater was burnt after 275 hours of work. In the conditions of example III, that is when the electric heater was covered with a ceramic layer and proofed with 0.1 % solution of chloroplatynic acid, the xylene conversion was as follows:
- at temp. of 220 -230°C -25 %
-at temp. of 230 -250°C -82 %
-at temp. of 250 -270°C -96 %

It may be seen from the described experiments that the method of the invention allows to purify gases at a very low power consumption level of 3 - 4 W per cu.m. of purified gas, i.e. 2.6 to 3.5 Kcal/cu.m., that means the power consumption is much lower than in other methods.

The method of afterburning of gases according to the invention and the device for this method may be par ticularly useful for stripping ethylene from fruit-storage chambers and deodorizing industrial plant halls.

## Claims

1. Method for catalytic purification of gases with low concentration of pollution by catalytic destruction of pollution on a catalyst bed, located between two layers of ceramic fill, with alternate changes of direction of gas flow in cycles, characterised in that the gas loaded with catalytically convertible pollution is driven through a catalyst bed which is heated to the point of initiation of reaction by means of electric heating members (6) submerged in granular catalyst used in gas afterburning processes and the external surface of the said heating members is previously covered with a ceramic layer.

2. Method according to claim 1, characterized in that the heating members (6) is covered with silicone oxides by proofing its surface by submerging it in an aqueous solution of potassium or sodium silicate, drying at 50-100°C and roasting it at 400-500°C.

3. Method according to claim 2 characterized in that the obtained layer of the heating members is proofing, after quenching with aqueous solution of chloroplatynic acid, drying and roasting at 450-550°C.

4. Method according to claim 3, characterized in that the aqueous solution of chloroplatynic acid is at a 0,1 % concentration.

5. Method according to claims 1 to 4, characterized in that heating is controlled so that the heat emitted by the heating member does not exceed 2 W/sq.cm/h, on the external surface of the heating member submerged in the catalyst bed.

6. Method according to claim 5, characterized in that heating is controlled so that the heat emitted by the heating member does not exceed 1,5 W/sq.cm/h, on the external surface of the heating member submerged in the catalyst bed.

7. Device for catalytic purification of gases with low concentration of pollution, characterized in that it is of cylindrical shape (1), divided with perforated partitions (2, 3, 4 and 5) into two chambers with ceramic fill, between the partitions (2 and 3) and (4 and 5), and one chamber with catalyst, between partitions (3 and 4), located between the ceramic fill chamber, and the catalyst chamber houses an electric heating member (6), the external surface of which is covered with a ceramic layer.

8. Device according to claim 7, characterized in that the external surface of the heating members - (6) is covered with silicone oxides or aluminium oxides.

9. Device according to claim 7, characterized in that the external surface of the heating members - (6) is covered with silicone oxides.

10. Device according to claims 7 to 9, characterized in that the external surface of the heating members (6) is further covered with a catalytically active substance.

F I G. 1